(19) Europäisches Patentamt
European Patent Office
Office européen des brevets

(11) **EP 4 191 988 B1**

(12) **EUROPEAN PATENT SPECIFICATION**

(45) Date of publication and mention
of the grant of the patent:
**22.10.2025 Bulletin 2025/43**

(21) Application number: **21860254.8**

(22) Date of filing: **19.08.2021**

(51) International Patent Classification (IPC):
*H04M 1/725* (2021.01)    *H04W 4/02* (2018.01)
*H04W 4/16* (2009.01)    *H04M 1/72454* (2021.01)
*H04M 1/72409* (2021.01)    *H04M 1/72412* (2021.01)

(52) Cooperative Patent Classification (CPC):
**H04M 1/724095; H04M 1/72412; H04M 1/72454;
H04W 4/023; H04W 4/16;** Y02D 30/70

(86) International application number:
**PCT/CN2021/113516**

(87) International publication number:
**WO 2022/042416 (03.03.2022 Gazette 2022/09)**

(54) **CALL METHOD AND TERMINAL DEVICE**

ANRUFVERFAHREN UND ENDGERÄTEVORRICHTUNG

PROCÉDÉ D'APPEL ET DISPOSITIF TERMINAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.08.2020 CN 202010856562**

(43) Date of publication of application:
**07.06.2023 Bulletin 2023/23**

(73) Proprietor: **Huawei Technologies Co., Ltd.
Shenzhen, Guangdong 518129 (CN)**

(72) Inventor: **YANG, Xuefei
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(56) References cited:
**CN-A- 106 371 799    CN-A- 106 470 326
CN-A- 108 322 232    CN-A- 109 640 280
CN-A- 110 138 937    CN-A- 113 099 026
CN-B- 106 817 657    US-A1- 2016 212 274
US-B1- 9 571 995**

**Description**

**TECHNICAL FIELD**

This application relates to the field of terminal technologies, and in particular, to a call method and a terminal device.

**BACKGROUND**

With popularization of smart devices and internet of things (internet of things, IoT) devices, devices that can be used for a network call are accordingly more diversified. For example, mobile devices such as a mobile phone, a watch, and glasses, or home appliance devices such as a sound box, a computer, and a television can implement a network call.

A mobile phone, a watch, or the like is a portable device, and a position thereof may be flexibly changed. However, for home appliance devices such as a sound box, a computer, or a television, a position thereof is usually fixed or does not change frequently. However, when a device with a fixed position is used for performing a call, a user often needs to move in space. Once the user is far away from the fixed device that is currently in the call, a communication effect becomes poor. US 2016/212274 A1 discloses a communication system including logic to detect a second communication device in proximity to a first communication device engaged in a call, and to provide a substantially uninterrupted transfer of selected parties to the call to the second communication device. A proximate device may be identified as one capable of rendering a particular data type, and a substantially uninterrupted transfer may be performed to the proximate device of data of the communications having the data type. An application associated with communication data may be identified, as well as a proximate device capable of providing the application, and a substantially uninterrupted transfer may be performed to the proximate device of data associated with the application.

CN 106 470 326 A discloses an audio-video communication terminal switching method and apparatus. The method comprises the following steps. A cloud server, according to the parameter information updated by various terminals under the same account, determines whether the various accounts need call forwarding or not. When some of the accounts need call forwarding, a to-be-called terminal is chosen according to the parameter information and/or the preset information. And the communication data corresponding to the current call terminal are subject to call forwarding and transmitted to the to-be-called terminal. The invention also discloses an audio-video communication terminal switching apparatus. With the invention, a user can automatically switch between terminals in audio-video communication according to the scenarios the user is in.

CN 109 640 280 A discloses a call control method and device, computer equipment, and a storage medium. The method comprises the following steps: connecting the communication between a first terminal and a second terminal to a third terminal, and establishing a communication channel between the second terminal and the third terminal, wherein the communication channel between the second terminal and the first terminal is a first communication channel, and the communication channel between the third terminal and the first terminal is a second communication channel; and based on different communication modes of the communication channels, processing the voice data when the second terminal interacts with the third terminal in voice according to a corresponding pre-processing rule. The communication between the first terminal and the second terminal is automatically connected to the third terminal, with no need to re-dial by the user, which reduces unnecessary operations of the user, making the operation simple, and improving the user experience.

**SUMMARY**

This application provides a call method and a terminal device, to improve call experience when a user uses a device with a fixed position to perform a call.

According to a first aspect, a call method is provided, including: determining a first distance of a second apparatus relative to a first apparatus, where the first apparatus is currently in a call, the second apparatus is an apparatus currently carried by a user, and there is a communication connection between the first apparatus and the second apparatus; determining that the first distance is greater than a preset distance; and controlling the call on the first apparatus to be transferred to the second apparatus or a third apparatus, so that the call continues on the second apparatus or the third apparatus, where a second distance of the third apparatus relative to the second apparatus is less than a preset threshold.

In this manner, when the user is far away from the first apparatus that is currently in the call, the call is transferred to the second apparatus currently carried by the user or the third apparatus near the second apparatus, so that the call continues on the second apparatus or the third apparatus, thereby avoiding that call quality is reduced due to the user being far away from the first apparatus.

In a possible design, before the call on the first apparatus is controlled to be transferred to the second apparatus or a third apparatus, a first orientation of the second apparatus relative to the first apparatus is further obtained, and a sound production direction of the first apparatus is adjusted based on the first orientation.

In this embodiment of this application, the first apparatus that is currently in the call adjusts the sound production direction based on the first orientation of the second apparatus relative to the first apparatus. For example, if the first orientation is left front, the first apparatus only sounds to the left front, and does not need to sound to another orientation, thereby reducing power consumption.

In a possible design, that a sound production direction of the first apparatus is adjusted based on the first orientation includes:

enhancing a sound produced by the first apparatus to the first orientation; and/or
suppressing sound intensity in another orientation other than the first orientation of the first apparatus.

For example, if the first orientation is the left front, the first apparatus may enhance sound intensity toward the left front, and suppress sound intensity toward another orientation, to highlight sound production in a direction in which the user is located. On the one hand, it is ensured that the user hears call content clearly, and on the other hand, invalid sound production can be avoided, thereby reducing power consumption.

According to the first aspect, after the determining a first distance of a second apparatus relative to a first apparatus, the method further includes: adjusting volume of the first apparatus based on the first distance.

For example, when the user (where the user currently carries the second apparatus) is away from the first apparatus, the first apparatus increases the volume, and when the user approaches the first apparatus, the first apparatus decreases the volume, to implement intelligent volume adjustment of the first apparatus in a call process and improve user experience.

According to the first aspect, the adjusting volume of the first apparatus based on the first distance includes: detecting, at a first moment, that a distance of the second apparatus relative to the first apparatus is the first distance, and detecting, at a second moment after the first moment, that a distance of the second apparatus relative to the first apparatus is a third distance; and when the first distance is greater than the third distance or a difference between the first distance and the third distance is greater than a first threshold, decreasing the volume of the first apparatus to first volume; or when the first distance is less than the third distance or a difference between the third distance and the first distance is greater than a second threshold, increasing the volume of the first apparatus to second volume, where the second volume is greater than the first volume.

In this embodiment of this application, when a distance of the user relative to the first apparatus changes from the first distance to the second distance, if the second distance is greater than the first distance, the volume is increased to the first volume, and if the second distance is less than the first distance, the volume is decreased to the second volume, to implement intelligent volume adjustment of the first apparatus in the call process and improve user experience.

Increasing the volume to the first volume may be increasing a fixed value to the first volume, and decreasing the volume to the second volume may be decreasing the fixed value to the second volume. Alternatively, the adjusted volume meets the following formula: $V_1 = V_0 + p(L_1 - L_0)$. $V_0$ is volume of the first apparatus at the first moment, $V_1$ is volume of the first apparatus at the second moment, $L_0$ is the first distance, $L_1$ is the third distance, and p is an adjustment coefficient.

In a possible design, the controlling the call on the first apparatus to be transferred to the second apparatus includes:
outputting first prompt information on the second apparatus, where the first prompt information is used to prompt the user whether to transfer the call to the second apparatus; and when an instruction used to indicate that the user agrees to transfer the call to the second apparatus is detected, controlling the call on the first apparatus to be transferred to the second apparatus.

In this embodiment of this application, before the first apparatus transfers the ongoing call to the second apparatus, the second apparatus prompts the user whether to determine to transfer the call to the second apparatus, and if the user confirms the transfer, the call is transferred to the second apparatus. In this manner, when the user is far away from the first apparatus that is currently in the call, the call is transferred to the second apparatus currently carried by the user, so that the call continues on the second apparatus, thereby avoiding that call quality is reduced due to the user being far away from the first apparatus.

In a possible design, the controlling the call on the first apparatus to be transferred to a third apparatus includes: determining all apparatuses whose distances from the second apparatus are less than the preset threshold; determining an apparatus closest to the second apparatus in all the apparatuses as the third apparatus; or displaying identification information of each apparatus in all the apparatuses on the second apparatus, detecting that the user selects first identification information from the identification information, and determining an apparatus corresponding to the first identification information as the third apparatus; and controlling the call on the first apparatus to be transferred to the third apparatus.

In this embodiment of this application, the first apparatus may alternatively transfer the ongoing call to the third apparatus near the second apparatus. The third apparatus is determined in a plurality of manners, for example, the apparatus closest to the second apparatus, or an apparatus specified by the user. In this manner, when the user is far away from the first apparatus that is currently in the call, the call is transferred to the third apparatus, so that the call continues on the third apparatus, thereby avoiding that call quality is reduced due to the user being far away from the first apparatus.

In a possible design, before the controlling the call on the first apparatus to be transferred to a third apparatus, the method further includes: outputting second prompt information on the second apparatus, where the second prompt information is used to prompt the user whether to transfer the call to the third apparatus; and detecting an instruction used to indicate that the user agrees to transfer the call to the third apparatus.

In this embodiment of this application, before the first apparatus transfers the ongoing call to the third apparatus, the second apparatus prompts the user whether to determine to transfer the call to the third apparatus, and if the user confirms the transfer, the call is transferred to the third apparatus. In this manner, when the user is far away from the first apparatus that is currently in the call, the call is transferred to the third apparatus, so that the call continues on the third apparatus, thereby avoiding that call quality is reduced due to the user being far away from the first apparatus.

According to a second aspect, a terminal device is further provided, including:

a processor; and

a computer storage medium, where the computer storage medium includes instructions, and when the processor executes the instructions, the terminal device performs the method of the first aspect.

According to a third aspect, a computer program product including instructions is further provided. When the computer program product runs on a computer, the computer performs the method provided in the first aspect.

For beneficial effects of the second aspect third aspect, refer to the beneficial effects of the first aspect, and details are not described again.

## BRIEF DESCRIPTION OF DRAWINGS

FIG. 1 is a schematic diagram of an application scenario according to an embodiment of this application;

FIG. 2 is a schematic flowchart of a call method according to an embodiment of this application;

FIG. 3 is a schematic flowchart of adjusting volume of a sound box that is currently in a call according to an embodiment of this application;

FIG. 4 is a schematic diagram of a structure of a sound box according to an embodiment of this application;

FIG. 5 is a schematic flowchart of adjusting a sound production orientation of a sound box that is currently in a call according to an embodiment of this application;

FIG. 6 is a schematic diagram of a display interface of a watch according to an embodiment of this application;

FIG. 7 is a schematic flowchart of transferring a call of a sound box that is currently in a call to a watch according to an embodiment of this application; and

FIG. 8 is a schematic diagram of a structure of a terminal device according to an embodiment of this application.

## DESCRIPTION OF EMBODIMENTS

As described in the background, when a device with a fixed position (hereinafter referred to as a fixed device) is used to perform a call, a user often needs to move in space. Once the user is far away from a fixed device that is currently in a call, call quality is reduced, for example, a voice of the other party cannot be clearly heard, and a voice is weakened.

For example, the fixed device is a sound box. Currently, there is one solution. Voice interaction software is installed in the sound box, and volume adjustment of the sound box can be controlled by using the voice interaction software. For example, when the voice interaction software detects that a user sends a voice instruction "a louder voice", volume of the sound box is increased. Therefore, in a process of performing a call by using the sound box, when the user is far away from the sound box and cannot hear clearly call content sent by the sound box, the user may send a voice instruction of increasing volume to control volume of the sound box, to improve call experience. However, when the user sends the voice instruction to control the sound box to adjust the volume, an ongoing call is interrupted, thereby affecting call experience.

Therefore, an embodiment of this application provides a call method, to implement continuous and smooth call experience through cooperation among a plurality of apparatuses, thereby improving call quality and call experience when a user uses a device with a fixed position to perform a call.

In the following description, the term "a plurality of" in embodiments of this application means two or more, and other quantifiers are similar. The term "and/or" describes an association relationship for describing associated objects and represents that three relationships may exist. For example, A and/or B may represent the following three cases: Only A exists, both A and B exist, and only B exists. In addition, for elements (element) appearing in singular forms "a", "an", and "the", they do not mean "one or only one" unless otherwise specified in the context, but mean "one or more". For example, "a device" means one or more such devices. Further, "at least one of (at least one of)..." means one or any combination of subsequent associated objects, for example, "at least one of A, B, and C" includes A, B, C, AB, AC, BC, or ABC. It should be understood that in embodiments of this application, "B corresponding to A" indicates that B is associated with A, and B may be determined based on A. However, it should be further understood that determining B based on A does not mean that B is determined based on only A. B may alternatively be determined based on A and/or other information.

In description of this application, terms such as "first" and "second" are merely used for distinguishing and description, but should not be understood as indicating or implying relative importance, or should not be understood as indicating or implying a sequence. For example, "a first indication" and "a second indication" represent only two different indications, without a sequence or relative importance.

An application scenario of an embodiment of this application relates to two apparatuses. Herein, two apparatuses are represented by using a first apparatus and a second apparatus. The first apparatus and the second apparatus may be connected, and the first apparatus may transfer call information to the second apparatus. Alternatively, the second apparatus may transfer call information to the first apparatus. The call includes a voice call, or may further include a video call if the first apparatus and the second apparatus include a display screen.

In a possible scenario, the first apparatus is an apparatus that can implement a call, and has a fixed position, or does not move frequently, such as a television, a refrigerator, a sound box, or a desktop computer in a house. The first apparatus may be an entity device, or may be a hardware module in the entity device, for example, may be a chip system or may be a logic module. This is not limited in this embodiment of this application. The chip system may include a chip, or may include a chip and another discrete device. The second apparatus may be a portable device carried by a user, such as a mobile phone or a wearable device such as a band, a watch, a headset, a necklace, a dress, and a shoe. Similarly, the second apparatus may be an entity device, or may be a hardware module in the entity device, for example, may be a chip system or may be a logic module. This is not limited in this embodiment of this application. Generally, the user carries the second apparatus, and the second apparatus may position the user in real time. In a process in which the first apparatus performs a call, the first apparatus and the second apparatus may cooperate to implement smooth call experience, to improve call quality and call experience when the user uses a device with a fixed position to perform a call. Specifically, the following aspects are included:

1. In a process of using the first apparatus to perform a call, the first apparatus may detect a position of the user in real time by using the second apparatus, and adjust volume of the first apparatus based on the position. For example, when it is detected that the user is far away from the first apparatus, the volume is increased, and when it is detected that the user gets close to the first apparatus, the volume is decreased. Therefore, in technical solutions of this application, the volume of the first apparatus can be automatically adjusted as the position of the user moves, the user does not need to send a voice instruction to adjust the volume of the first apparatus, and an ongoing call is not interrupted.

2. In the process of using the first apparatus to perform a call, the first apparatus may detect an orientation of the second apparatus relative to the first apparatus, and adjust a sound production direction based on the method. For example, if the first apparatus determines that the second apparatus is located in left front of the first apparatus, the sound production direction is in the left front. Therefore, the first apparatus does not need to sound in all orientations, and only needs to sound in an orientation in which the second apparatus is located (that is, a direction in which the user is located), thereby reducing power consumption.

3. In the process of using the first apparatus to perform a call, when detecting that the second apparatus is far away from the first apparatus, the first apparatus may transfer the call to the second apparatus, or transfer the call to a third apparatus located near the second apparatus. Because the user carries the second apparatus, when the user is far away from the first apparatus that is currently in the call, the call continues on the second apparatus or the third apparatus near the second apparatus, which can ensure a smooth call and improve call experience.

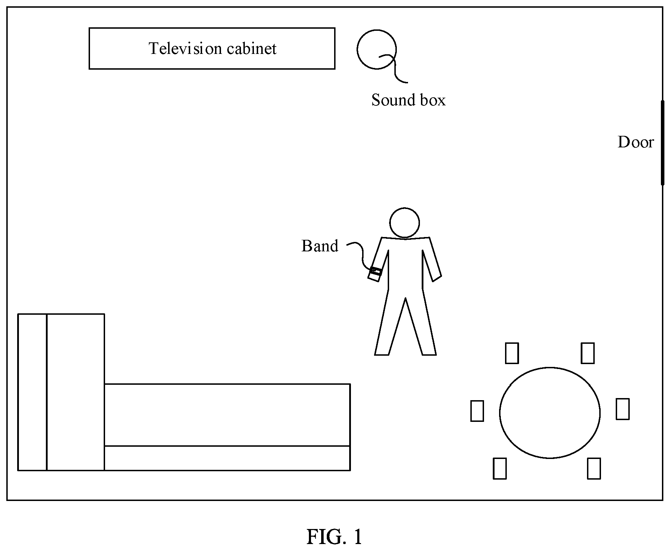

FIG. 1 is a schematic diagram of an example scenario according to an embodiment of this application. The scenario includes a first apparatus and a second apparatus. In FIG. 1, that the first apparatus is a sound box is used as an example, and that the second apparatus is a band worn by a user is used as an example. When in a call, the sound box may detect a position of the band, adjust volume of the sound box and/or a sound production direction based on the position. Alternatively, when it is detected that the band is far away from the sound box, the call may be transferred to the band or another device near the band, to ensure a smooth call.

The following embodiments mainly use the application scenario shown in FIG. 1 as an example.

**Embodiment 1**

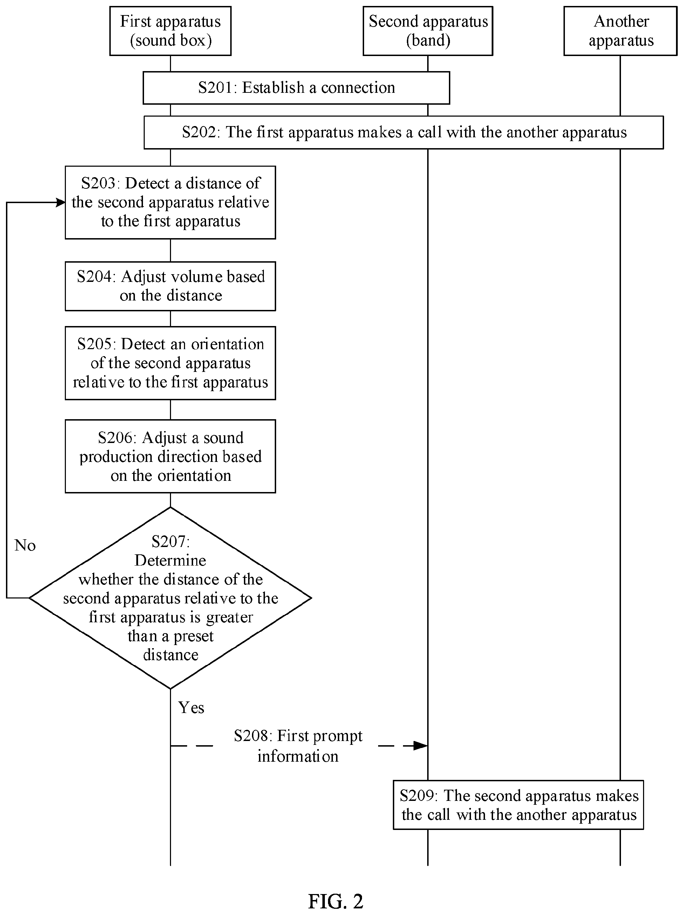

In this embodiment, in a process in which a user uses a first apparatus (for example, a sound box) to perform a call with another apparatus, when the first apparatus detects that the user is far away from the first apparatus, volume of the first apparatus may be adjusted. For a specific procedure, refer to FIG. 2. FIG. 2 is a schematic flowchart of a call method according to an embodiment of this application. The method may be applied to the application scenario shown in FIG. 1. Specifically, all or some of steps in the method may be performed by the first apparatus in FIG. 1, may be performed by the second apparatus, or may be performed by another apparatus different from the first apparatus and the second apparatus in FIG. 1. The technical solution of Embodiment 1 may be implemented by using S201-S204 in FIG. 2. A procedure of the method includes the following steps:

S201: The first apparatus establishes a connection to the second apparatus.

The first apparatus establishes a connection to the second apparatus in a plurality of manners, such as a wireless Wi-Fi connection and a Bluetooth connection. Alternatively, for example, the first apparatus is a sound box, the second apparatus is a band, an application (application, APP) that is used to implement communication with the sound box may be installed on the band, and the user establishes communication between the band and the sound box by using the application. For example, the first apparatus may send a request for establishing a connection to the second apparatus, the second apparatus sends a request for agreeing on the connection to the first apparatus, and then the first apparatus establishes a connection to the second apparatus.

S202: The first apparatus establishes a call with another apparatus.

For example, a user A performs a call with another apparatus (for example, an apparatus of a user B) by using the first apparatus. In a possible case, when the first apparatus is connected to a network, the first apparatus may implement a call with another apparatus. The another apparatus may be an apparatus having a network call function, such as a mobile phone or a sound box, and the another apparatus and the first apparatus may be of a same type, for example, both are sound boxes, or may be of different types, for example, the first apparatus is a sound box, and the another apparatus is a mobile phone. The call may be a network call, and may be understood as a voice call or a video call in an application such as WeChat or QQ (when the first apparatus has a display screen and a camera). For example, the first apparatus may be set with a contact account, and a network call may be implemented between apparatuses corresponding to different accounts. For example, the first apparatus is a sound box A, and the another apparatus is a sound box B. The sound box A has an account A, and the sound box B has an account B. The sound box A performs a network call based on the account A with the account B of the sound box B, where the account may be a mobile phone number or another account, which is not limited in this embodiment of this application.

In one manner, the first apparatus receives an incoming call, and the first apparatus answers the incoming call as triggered by the user. A manner of receiving the incoming call by the first apparatus includes: A mobile terminal (such as a mobile phone) of the user receives the incoming call, and the mobile phone transfers the incoming call to the first apparatus to answer as triggered by the user; the first apparatus itself receives an incoming call from another apparatus, and in this case, there are a plurality of manners in which the user triggers the first apparatus to answer the incoming call, for example, an answer button is disposed on the first apparatus, and the first apparatus answers the incoming call when detecting an operation for the answer button; or the first apparatus answers the incoming call when detecting a voice instruction including "to answer the phone" or "answer the phone".

In another manner, the first apparatus initiates a call to a peer end, and when the peer end answers the call, the first apparatus and the peer end implement a call. A manner of initiating a call by the first apparatus includes: Contact methods of a plurality of contacts are set on the first apparatus, the user selects a contact therefrom, and the first apparatus initiates a call based on a contact method of the contact; or the user initiates a call by using a mobile terminal (for example, a mobile phone), and transfers the call to the first apparatus.

It should be noted that an execution sequence of S201 and S202 is not limited in this embodiment of this application. For example, S202 may be performed before S201 is performed, that is, in a process in which the first apparatus performs a call with another apparatus, the first apparatus establishes a connection to the second apparatus, or the second apparatus establishes a connection to the first apparatus.

S203: The first apparatus obtains a distance of the second apparatus relative to the first apparatus.

For example, the second apparatus locates second position coordinates (x2, y2, z2) of the second apparatus, and sends the second position coordinates to the first apparatus. The first apparatus may determine first position coordinates (x1, y1, z1) of the first apparatus. The first apparatus determines the distance of the second apparatus relative to the first apparatus based on the first position coordinates and the second position coordinates. Before the first apparatus determines the distance of the second apparatus relative to the first apparatus based on the first position coordinates and the second position coordinates, the first apparatus may further perform coordinate conversion on the first position coordinates and the second position coordinates, so that the first position coordinates and the second position coordinates are in a same coordinate system, for example, both are converted into a world coordinate system. Alternatively, the first apparatus may locate the first position coordinates (x1, y1, z1) of the first apparatus, and send the first position coordinates to the second apparatus, and the second apparatus locates the second position coordinates (x2, y2, z2) of the second apparatus, and then determines the distance of the second apparatus relative to the first apparatus based on the first position coordinates and the second position coordinates, and sends the distance to the first apparatus. The first apparatus or the second apparatus may locate themselves based on an indoor location technology, and the indoor location technology includes but is not limited to ultra wide band (ultra wide band, UWB) locating, Wi-Fi locating, Bluetooth locating, and the like.

In some embodiments, the first apparatus may obtain a distance from the second apparatus in real time or periodically. For example, the first apparatus sends a prompt to the second apparatus at an interval of specific time, to prompt the second apparatus to report a geographical position to the first apparatus; or the second apparatus actively reports a geographical position to the second apparatus at an interval of specific time; or the second apparatus sends current geographical position coordinates to the first apparatus when detecting that the current position coordinates change relative to a previously located geographical position, and/or when the current geographical position changes by a preset distance relative to the previously located geographical position. Therefore, because the second apparatus sends the geographical position of the second apparatus in real time, the first apparatus can determine the distance of the second apparatus relative to the first apparatus in real time.

For example, the first apparatus may store a correspondence between the second position coordinates of the second apparatus and time. The time may be time at which the second apparatus detects the second position coordinates, or time at which the first apparatus receives the second position coordinates. For example, as shown in the following Table 1, a second geographical position of the second apparatus changes with time.

**Table 1**

| Second apparatus | Time | Second position coordinates (x2, y2, z2) | Position of a first device (x1, y1, z1) |
|---|---|---|---|
| Band | First moment | (a, b, c) | (m, p, q) |
| | Second moment (after the first moment) | (d, e, f) | |

According to the invention, the first apparatus determines a distance L1 of the second apparatus relative to the first apparatus at the first moment, further determines a distance L2 of the second apparatus relative to the first apparatus at the second moment, and determines, by comparing L1 and L2, whether volume needs to be adjusted.

Optionally, to save storage space, the first apparatus may further delete second position coordinates corresponding to a moment relatively long before a current moment.

S204: The first apparatus adjusts volume based on the detected distance. The distance L of the second apparatus relative to the first apparatus is:

$$L = \sqrt{(x2 - x1)^2 + (y2 - y1)^2 + (z2 - z1)^2}$$

When the first apparatus finds that distances L calculated at different time indicate that the distance between the second apparatus and the first apparatus increases, the first apparatus can increase the volume. When the first apparatus finds that distances L calculated at different time indicate that the distance between the second apparatus and the first apparatus decreases, the first apparatus can decrease the volume.

For example, an implementation is as follows: The foregoing Table 1 is used as an example. At the first moment, the distance of the second apparatus relative to the first apparatus is L1, and the volume is first volume V0, and at the second moment, the distance of the second apparatus relative to the first apparatus is L2. If L2 is greater than L1 or L2-L1 is greater than a threshold, the first volume V0 is increased by first preset volume to second volume V1, where the first preset volume may be a preset fixed volume value, that is, fixed volume is increased whenever the distance L increases. If L2 is less than L1 or L1-L2 is greater than the threshold, the first volume V0 is decreased by second preset volume to third volume V1, where the second preset volume may be a preset fixed volume value, that is, fixed volume is decreased whenever the distance L decreases.

For example, another possible implementation is as follows: The first device may adjust the volume based on the following formula:

$$V_1 = V_0 + p\,(L_1 - L_0)$$

$V_0$ is volume of the first apparatus at the first moment, $V_1$ is volume of the first apparatus at the second moment after the first moment, $L_0$ is the distance of the second apparatus relative to the first apparatus at the first moment, $L_1$ is the distance of the second apparatus relative to the first apparatus at the second moment, and p is an adjustment coefficient and may be preset or may be a value dynamically adjusted. For example, a value of p may be adjusted by the user as required.

Certainly, in addition to the foregoing two implementations, there may be another manner of adjusting the volume. Provided that the distance L between the second apparatus and the first apparatus increases, the first apparatus increases the volume; and provided that the distance L between the second apparatus and the first apparatus decreases, the first apparatus decreases the volume.

An implementation process of Embodiment 1 is described by using an example in which the first apparatus is a sound box and the second apparatus is a watch.

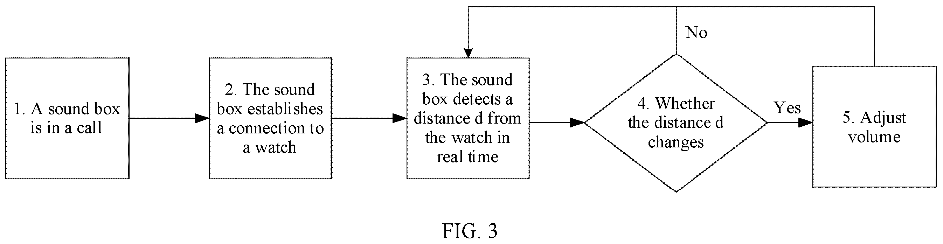

Refer to FIG. 3. 1. The sound box is currently in a call. 2. The sound box establishes a connection to the watch. An execution sequence between step 2 and step 1 is not limited. 3. The sound box detects a distance d from the watch in real time. For an implementation process of step 3, refer to the description of the embodiment shown in FIG. 2 (specifically, in S203). 4. Determine whether the distance d changes. 5. If the distance d changes, adjust the volume, and if the distance does not change, continue to perform step 3. For a process of adjusting the volume based on the distance d, refer to the embodiment shown in FIG. 2 (specifically, in S204).

**Embodiment 2**

In this embodiment, in a process in which a user uses a first apparatus (for example, a sound box) to perform a call with another apparatus, the first apparatus may detect an orientation of the user relative to the first apparatus, and adjust a sound production direction of the first apparatus based on the orientation. A specific procedure of the technical solution in Embodiment 2 may be adding steps S205-S206 on a basis of Embodiment 1. For example, S205-S206 may be added after S204, or may be added after S202 and before S204. In short, an execution sequence of S205-S206 and S203-S204 is not limited. Alternatively, a specific procedure of the technical solution in Embodiment 2 may be S201-S202 and S205-S206 (excluding S203-S204) in FIG. 2.

S205: The first apparatus detects an orientation of a second apparatus relative to the first apparatus.

The orientation of the second apparatus relative to the first apparatus may be a vector from first position coordinates to second position coordinates. For descriptions of the first position coordinates and the second position coordinates, refer to Embodiment 1. Details are not described herein again.

S206: The first apparatus adjusts a sound production direction based on the orientation.

It is assumed that the first apparatus is a sound box, and the sound box may sound around. When the first apparatus determines the orientation of the second apparatus relative to the first apparatus, sound production in the orientation may be enhanced, and/or sound production in another orientation may be suppressed.

In a possible implementation, it is assumed that a sound signal sent by the first apparatus meets: A * first sound signal + B * another sound signal. The first sound signal is a sound signal sent by the first apparatus to a first orientation (the first orientation is the orientation of the second apparatus relative to the first apparatus), and the another sound signal is a sound signal sent by the first apparatus to another orientation. A is a first weight, B is a second weight, and A + B = 1. In this case, that the first apparatus enhances sound production in the first orientation may mean that the first weight A is increased, for example, to a third weight C, and correspondingly, the second weight B is decreased, for example, to a fourth weight D. After the first apparatus enhances sound production in the first orientation, a sound signal sent by the first apparatus meets: C * first sound signal + D * another sound signal. C is the third weight, and D is the fourth weight. C + D = 1, the third weight C is greater than the first weight A, and the fourth weight D is less than the second weight B. That is, sound production in the first orientation is highlighted. Similarly, that the first apparatus suppresses sound production in another orientation may mean that the second weight B is decreased, and correspondingly, the first weight A is increased. Alternatively, that the first apparatus suppresses sound production in another orientation may mean that the sound production in another orientation is mute, for example, the second weight is decreased to 0.

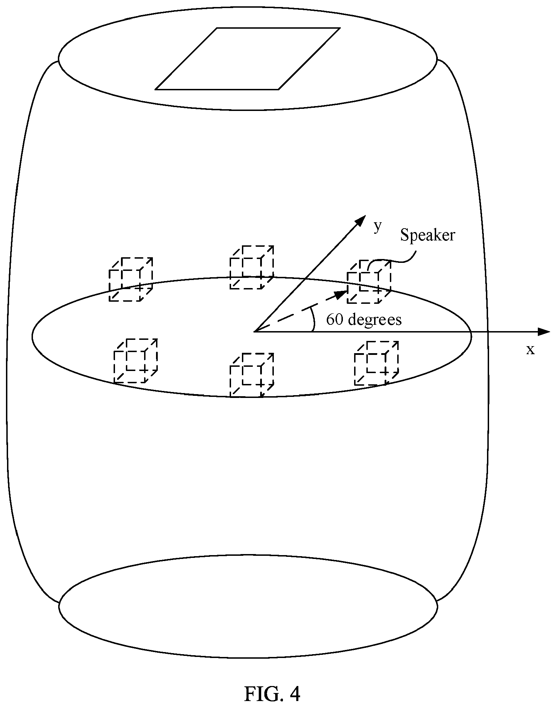

Alternatively, the first device has a distributed speaker structure. With reference to FIG. 4, speakers are disposed in different orientations inside the first apparatus. When the first apparatus determines the orientation of the second apparatus relative to the first apparatus, sound intensity of a speaker in the orientation may be increased, and a speaker in another orientation is controlled to produce no sound or reduce sound intensity. For example, assuming that the orientation of the second apparatus relative to the first apparatus is 60 degrees, a speaker corresponding to 60 degrees is controlled to sound, and a speaker in another orientation is mute. Alternatively, sound production intensity of the speaker corresponding to 60 degrees is increased, and sound production intensity of the speaker in the another orientation is decreased.

Therefore, in Embodiment 2, the first apparatus adjusts a sound production direction as the orientation of the user relative to the first apparatus changes, and does not need to sound in all orientations, thereby reducing power consumption.

Optionally, the first apparatus may be combined sound boxes or one sound box in the combined sound boxes. The combined sound boxes include at least two sound boxes, including a primary sound box and a secondary sound box. The first apparatus may be the primary sound box.

An implementation process of Embodiment 2 is described by using an example in which the first apparatus is a sound box and the second apparatus is a watch.

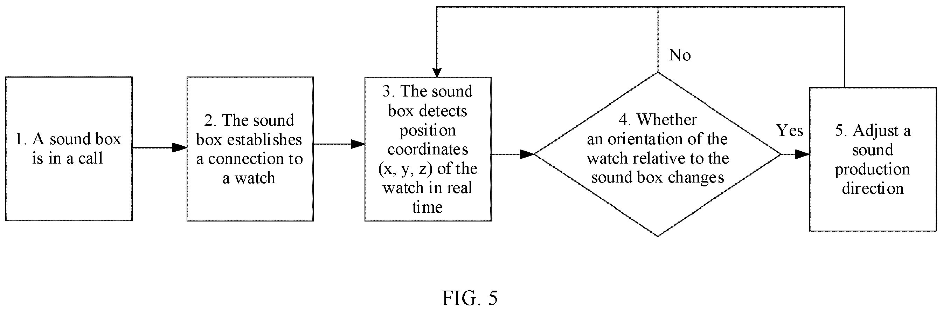

Refer to FIG. 5. 1. The sound box is currently in a call. 2. The sound box establishes a connection to the watch. An execution sequence between step 1 and step 2 is not limited. 3. The sound box detects position coordinates (x, y, z) of the watch in real time. 4. Determine whether an orientation of the watch relative to the sound box changes. For an implementation process of step 4, refer to the description of the embodiment shown in FIG. 2 (specifically, in S205). 5. If the orientation changes, adjust a sound production direction; and if the orientation does not change, continue to perform step 3. For a process of adjusting the sound production direction based on the orientation, refer to the embodiment shown in FIG. 2 (specifically, in S206).

**Embodiment 3**

In Embodiment 3, in a process in which a user uses a first apparatus (for example, a sound box) to perform a call with another apparatus, when the first apparatus detects that the user is far away from the first apparatus, the first apparatus may transfer the call to a second apparatus (such as a band worn by the user) or a third apparatus near the second apparatus. A specific procedure of the technical solution in Embodiment 3 may be S201-S203 and S207-S209 in FIG. 2, and S204-S206 may or may not be included.

S207: The first apparatus determines whether a distance of the second apparatus relative to the first apparatus is greater than a preset distance. If the distance of the second apparatus relative to the first apparatus is greater than the preset distance, perform step S208; otherwise, perform step S203.

The first apparatus may store the preset distance, and the preset distance is used to determine whether a call needs to be transferred. The preset distance may be a preset fixed value, such as 5 meters, 4 meters, or 3 meters. This value is not limited in this embodiment of this application. The preset distance may alternatively be a value dynamically adjusted. For example, the user may manually adjust the preset distance.

S207 is an optional step, and may or may not be performed. For example, S207 may be replaced with the following: The first apparatus determines that the distance of the second apparatus relative to the first apparatus changes, that is, first prompt information is immediately sent if it is detected that a position changes.

S208: The first apparatus sends first prompt information to the second apparatus device, where the first prompt information is used to prompt to transfer a call; and/or the first prompt information is used to prompt the user whether to transfer the call to the second apparatus. If the first apparatus detects an instruction used to instruct to transfer the call to the second apparatus, perform step S209; or if the first apparatus detects no instruction used to instruct to transfer the call to the second apparatus or detects an instruction for refusing to transfer the call to the second apparatus, continue to perform step S203.

When the distance of the second apparatus relative to the first apparatus is greater than the preset distance, it indicates that the user is relatively far away from the first apparatus. In this case, the first apparatus may transfer the call to the second apparatus, and the user continues the call by using the second apparatus. Optionally, to improve user experience, before the first apparatus transfers the call to the second apparatus, the second apparatus may output the first prompt information, to prompt the user to transfer the call to the second apparatus.

Optionally, the first apparatus may not need to send the first prompt information to the second apparatus, that is, when the first apparatus determines that the distance of the second apparatus relative to the first device is greater than the preset distance, the first apparatus automatically transfers the call to the second apparatus. That is, step S208 is an optional step, and therefore is represented by a dashed line in the figure.

It should be noted that S207 in FIG. 2 uses an example in which the first apparatus compares the distance with the preset distance. In some other embodiments, the second apparatus may compare the distance with the preset distance. If the first apparatus performs a process of comparing the distance with the preset distance, in a possible implementation, when determining that the distance of the second apparatus relative to the first apparatus is greater than the preset distance, the first apparatus sends the first prompt information to the second apparatus. If the first prompt information is used to prompt the user whether to transfer the call to the second apparatus, when the second apparatus detects an instruction that the user agrees to transfer the call to the second apparatus, the second apparatus sends an agree instruction to the first apparatus, and after receiving the agree instruction, the first apparatus transfers the call to the second apparatus. If the second apparatus performs a process of comparing the distance with the preset distance, in a possible implementation, after determining that the distance of the second apparatus relative to the first apparatus is greater than the preset distance, the second apparatus automatically generates the first prompt information. In this case, step S208 may be replaced with the following: The second apparatus generates the first prompt information. Similarly, if the first prompt information is used to prompt the user whether to transfer an ongoing call of the first apparatus to the second apparatus, when the second apparatus detects an instruction that the user agrees to transfer the call to the second apparatus, the second apparatus sends an agree instruction to the first apparatus, and after receiving the agree instruction, the first apparatus transfers the call to the second apparatus. Optionally, the second apparatus may not generate the first prompt information, but directly accept call transfer of the first apparatus.

A process in which the first apparatus transfers the call to the second apparatus includes: The first apparatus sends a call transfer message to another apparatus, where the call transfer message is used to indicate to transfer the call to the second apparatus, and after receiving the call transfer message, the another apparatus performs a call with the second apparatus. In some embodiments, the first apparatus and the second apparatus have a same account, that is, the user logs in to different apparatuses by using the same account. Therefore, when the call of the first apparatus is transferred to the second apparatus, the call with another apparatus is still performed based on the same account, but a device in the call is different.

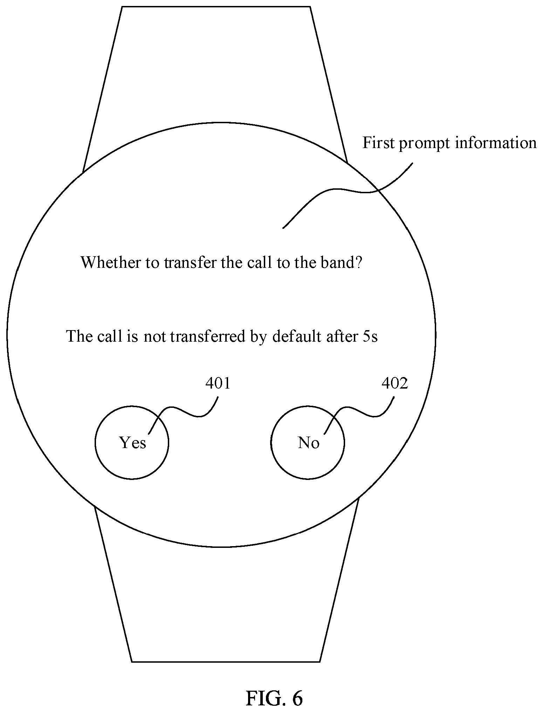

For example, for a process in which the second apparatus detects that the user agrees or refuses to transfer the call to the second apparatus, refer to FIG. 6. For example, the second apparatus is a band. FIG. 6 shows first prompt information on the band. The first prompt information includes text information "Whether to transfer the call to the band?"; and may further include a first button 401 and a second button 402. When the band detects an operation for the first button 401, the band determines that the user agrees to transfer the call to the band, and when the band detects an operation for the second button 402, the band determines that the user refuses to transfer the call to the band. In some other embodiments, after displaying the first prompt information, the band may wait for preset duration. If no operation of the user is detected within the preset duration, the call is transferred to the band by default or the call is not transferred to the band by default.

Optionally, when the user refuses to transfer the call to the band, the second apparatus may send third prompt information to the first apparatus, where the third prompt information is used to prompt the second apparatus to continue to hold the call, or prompt the second apparatus to hang up the call.

S209: The second apparatus continues the call with another apparatus.

Optionally, after step S209, the second apparatus may continue to detect the distance of the second apparatus relative to the first apparatus. When it is detected that the distance of the second apparatus relative to the first apparatus is less than the preset distance, the second apparatus may retransfer the call to the first apparatus.

It should be noted that in the embodiment shown in FIG. 2, that the first apparatus transfers the call to the second apparatus is used as an example. In another embodiment, the first apparatus may alternatively transfer the call to a third apparatus. The third apparatus may be an apparatus near the second apparatus, for example, a distance between the third apparatus and the second apparatus is less than a threshold. In a possible scenario, the first apparatus is located in a living room. In a process of using the first apparatus to perform a call, the user wearing the second apparatus moves to a bedroom, and a third apparatus such as a sound box is in the bedroom. In this case, the first apparatus may transfer the call to the third apparatus, that is, the sound box. Therefore, if each room in a house has a device that can perform call transfer, call continuity in a plurality of rooms can be completed by using the technical solution in Embodiment 3.

The third apparatus may be an apparatus closest to the second apparatus in a plurality of apparatuses near the second apparatus. Alternatively, the second apparatus displays identification information of each apparatus in the plurality of apparatuses nearby, and detects that the user selects first identification information thereof. The third apparatus is an apparatus corresponding to the first identification information, that is, the third apparatus is an apparatus selected by the user.

A process in which the first apparatus transfers the call to the third apparatus includes: The first apparatus transfers the call to the second apparatus, and the second apparatus detects the third apparatus, and then transfers the call to the third apparatus. Alternatively, the second apparatus detects the third apparatus, and sends information about the third apparatus to the first apparatus, and the first apparatus is connected to the third apparatus, and transfers the call to the third apparatus.

An implementation process of Embodiment 2 and Embodiment 3 is described by using an example in which the first apparatus is a sound box and the second apparatus is a watch.

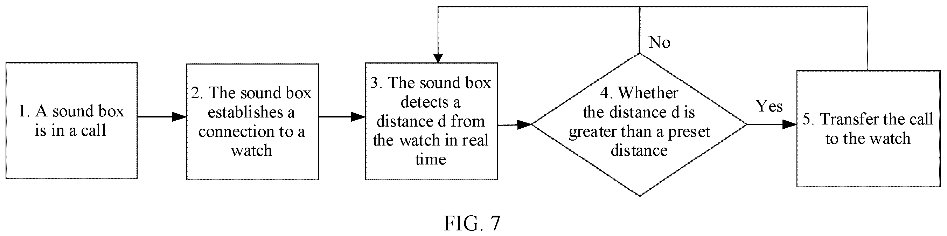

Refer to FIG. 7. 1. The sound box is currently in a call. 2. The sound box establishes a connection to the watch. An execution sequence between step 1 and step 2 is not limited. 3. The sound box detects a distance d from the watch in real time. 4. Determine whether the distance d is greater than a preset distance. For an implementation process of step 4, refer to the description of the embodiment shown in FIG. 2 (specifically, in S207). 5. If the distance d is greater than the preset distance, transfer the call to the watch; or if the distance d is less than or equal to the preset distance, continue to perform step 3. For a process of call transfer, refer to the embodiment shown in FIG. 2 (specifically, in S208-S209).

The foregoing Embodiment 1, Embodiment 2, and Embodiment 3 may be separately implemented, or may be implemented in combination of any two or more embodiments, which is not limited herein.

In the foregoing embodiments provided in this application, the method provided in the embodiments of this application is described from a perspective of the first apparatus (for example, a sound box) as an execution body. To implement functions in the foregoing method provided in the embodiments of this application, a terminal device may include a hardware structure and/or a software module, and implement the foregoing functions in a form of a hardware structure, a software module, or a hardware structure plus a software module. Whether one of the foregoing functions is performed in the manner of a hardware structure, a software module, or a hardware structure and a software module depends on a specific application and design constraints of the technical solutions.

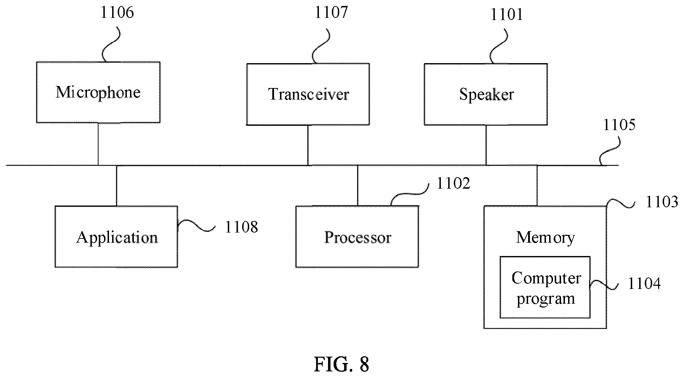

As shown in FIG. 8, some other embodiments of this application disclose a terminal device. The terminal device is, for example, the first apparatus or the second apparatus in the foregoing. The terminal device may include a speaker 1101, one or more processors 1102, a transceiver 1107, a microphone 1106, and a plurality of applications 1108, where the components may be connected by using one or more communication buses 1105. Optionally, a display may be further included.

The processor 1102 may include one or more processing units. For example, the processor 1102 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors. The controller may be a neural center and a command center of the terminal device. The controller may generate an operation control signal based on an instruction operation code and a time sequence signal, to complete control of instruction fetching and instruction execution. A memory may be further disposed in the processor 1102, and is configured to store instructions and data. In some embodiments, the memory in the processor 1102 is a cache. The memory may store instructions or data that has been used or is cyclically used by the processor 1102. If the processor 1102 needs to use the instructions or the data again, the processor may directly invoke the instructions or the data from the memory. This avoids repeated access, and reduces waiting time of the processor 1102, thereby improving system efficiency.

The processor 1102 may further integrate an application processor and a modem. The application processor mainly processes an operating system, a user interface, an application, and the like. The modem mainly processes wireless communication, such as modulation of to-be-sent data and demodulation of received data.

The speaker 1101 is configured to play call audio. Specifically, the processor 1102 plays, by using the speaker 1101, audio information received by using the transceiver. The microphone 1106 is configured to collect a sound signal sent by a user, and send the sound signal to a peer end by using the transceiver 1107.

The transceiver 1107 is configured to implement a call with another apparatus, and may specifically include a receiver and a transmitter, where the receiver is configured to receive data, and the transmitter is configured to send data. The transceiver 1107 is connected to one or more antennas, and may be configured to receive and send information. The transceiver 1107 includes but is not limited to at least one amplifier, a transceiver, a phase combiner, a low noise amplifier, a duplexer, and the like. In addition, the transceiver 1107 may further communicate with another mobile device through wireless communication and a network. The wireless communication may use any communication standard or protocol, including but not limited to a global system for mobile communications, a general packet radio service, code division multiple access, wideband code division multiple access, long term evolution, an email, a short message service, and the like.

For example, if the terminal device shown in FIG. 8 is the foregoing first apparatus, one or more computer programs 1104 are stored in a memory 1103 and configured to be executed by the one or more processors 1102. The one or more computer programs 1104 include instructions, and the instructions may be used to perform steps of the first apparatus in the embodiment shown in FIG. 2.

For example, if the terminal device shown in FIG. 8 is the foregoing second apparatus, the one or more computer programs 1104 are stored in the memory 1103 and configured to be executed by the one or more processors 1102. The one or more computer programs 1104 include instructions, and the instructions may be used to perform steps of the second apparatus in the embodiment shown in FIG. 2.

Referring to "one embodiment", "some embodiments", or the like described in this specification means that specific features, structures, or characteristics described with reference to the embodiments are included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

In addition, according to the context, the term "when" or "after" used in the foregoing embodiments may be interpreted as a meaning of "if" or "after" or "in response to determining" or "in response to detecting". Similarly, according to the context, the phrase "if it is determined that" or "if (a stated condition or event) is detected" may be interpreted as a meaning of "when it is determined that" or "in response to determining" or "when (the stated condition or event) is detected" or "in response to detecting (the stated condition or event)". In addition, in the foregoing embodiment, a relationship term such as the first or the second is used to distinguish one entity from another entity, without limiting any actual relationship and order between these entities.

In the foregoing embodiments provided in this application, the method provided in the embodiments of this application is described from a perspective of the terminal device (for example, a mobile phone) as an execution body. To implement functions in the foregoing method provided in the embodiments of this application, a terminal device may include a hardware structure and/or a software module, and implement the foregoing functions in a form of a hardware structure, a software module, or a hardware structure plus a software module. Whether one of the foregoing functions is performed in the manner of a hardware structure, a software module, or a hardware structure and a software module depends on a specific application and design constraints of the technical solutions.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The available medium may be a magnetic medium (for example, a floppy disk, a hard disk, or a magnetic tape), an optical medium (for example, a DVD), a semiconductor medium (for example, a solid-state disk (Solid-State Disk, SSD)), or the like. If there is no conflict, solutions in the foregoing embodiments may be used in combination.

**Claims**

1. A call method, comprising:

   determining (S203) a first distance of a second apparatus relative to a first apparatus, wherein the first apparatus is currently in a call, the second apparatus is an apparatus currently carried by a user, and there is a communication connection between the first apparatus and the second apparatus;
   determining (S207) that the first distance is greater than a preset distance; and
   controlling the call on the first apparatus to be transferred to the second apparatus or a third apparatus, so that the call continues on the second apparatus or the third apparatus, wherein a second distance of the third apparatus relative to the second apparatus is less than a preset threshold, **characterised in that**
   after the determining a first distance of a second apparatus relative to a first apparatus, the method further comprises:

   adjusting (S204) volume of the first apparatus based on the first distance,
   the adjusting volume of the first apparatus based on the first distance comprises:

   detecting, at a first moment, that a distance of the second apparatus relative to the first apparatus is the first distance, and detecting, at a second moment after the first moment, that a distance of the second apparatus relative to the first apparatus is a third distance; and
   when the first distance is greater than the third distance or a difference between the first distance and the third distance is greater than a first threshold, decreasing the volume of the first apparatus to first volume; or
   when the first distance is less than the third distance or a difference between the third distance and the first distance is greater than a second threshold, increasing the volume of the first apparatus to second volume, wherein the second volume is greater than the first volume.

2. The method according to claim 1, wherein before the controlling the call on the first apparatus to be transferred to the second apparatus or a third apparatus, the method further comprises:

   obtaining (S205) a first orientation of the second apparatus relative to the first apparatus; and
   adjusting (S206) a sound production direction of the first apparatus based on the first orientation.

3. The method according to claim 2, the adjusting a sound production direction of the first apparatus based on the first orientation comprises:

   enhancing a sound produced by the first apparatus to the first orientation; and/or
   suppressing sound intensity in another orientation other than the first orientation of the first apparatus.

4. The method according to any one of claims 1 to 3, wherein the adjusting volume of the first apparatus based on the first distance meets the following formula:

$$V_1 = V_0 + p\,(L_1 - L_0),$$

wherein

$V_0$ is volume of the first apparatus at the first moment, $V_1$ is volume of the first apparatus at the second moment, $L_0$ is the first distance, $L_1$ is the third distance, and p is an adjustment coefficient.

5. The method according to any one of claims 1 to 4, wherein the controlling the call on the first apparatus to be transferred to the second apparatus comprises:

outputting first prompt information on the second apparatus, wherein the first prompt information is used to prompt the user whether to transfer the call to the second apparatus; and
when an instruction used to indicate that the user agrees to transfer the call to the second apparatus is detected, controlling the call on the first apparatus to be transferred to the second apparatus.

6. The method according to any one of claims 1 to 4, wherein the controlling the call on the first apparatus to be transferred to a third apparatus comprises:

determining all apparatuses whose distances from the second apparatus are less than the preset threshold;
determining an apparatus closest to the second apparatus in all the apparatuses as the third apparatus; or
displaying identification information of each apparatus in all the apparatuses on the second apparatus, detecting that the user selects first identification information from the identification information, and determining an apparatus corresponding to the first identification information as the third apparatus; and
controlling the call on the first apparatus to be transferred to the third apparatus.

7. The method according to claim 6, wherein before the controlling the call on the first apparatus to be transferred to a third apparatus, the method further comprises:

outputting second prompt information on the second apparatus, wherein the second prompt information is used to prompt the user whether to transfer the call to the third apparatus; and
detecting an instruction used to indicate that the user agrees to transfer the call to the third apparatus.

8. A terminal device, comprising:

a processor (1102); and
a computer storage medium, wherein the computer storage medium comprises instructions, and when the processor executes the instructions, the terminal device is enabled to perform a method according to any one of claims 1 to 7.

9. A computer program product, comprising computer instructions, wherein when the computer instructions are run on a terminal device, the terminal device is enabled to perform the method according to any one of claims 1 to 7.

**Patentansprüche**

1. Anrufverfahren, das umfasst:

Bestimmen (S203) einer ersten Entfernung einer zweiten Einrichtung relativ zu einer ersten Einrichtung, wobei sich die erste Einrichtung derzeit in einem Anruf befindet, die zweite Einrichtung eine Einrichtung ist, die derzeit von einem Benutzer getragen wird, und eine Kommunikationsverbindung zwischen der ersten Einrichtung und der zweiten Einrichtung besteht;
Bestimmen (S207), dass die erste Entfernung größer als eine voreingestellte Entfernung ist; und
Steuern des Anrufs auf der ersten Einrichtung, um an die zweite Einrichtung oder eine dritte Einrichtung weitergeleitet zu werden, so dass der Anruf auf der zweiten Einrichtung oder der dritten Einrichtung fortgesetzt wird, wobei eine zweite Entfernung der dritten Einrichtung relativ zu der zweiten Einrichtung kleiner als ein voreingestellter Schwellenwert ist, **dadurch gekennzeichnet, dass**
nach dem Bestimmen einer ersten Entfernung einer zweiten Einrichtung relativ zu einer ersten Einrichtung, das Verfahren ferner umfasst:

Anpassen (S204) einer Lautstärke der ersten Einrichtung auf der Grundlage der ersten Entfernung, wobei das Anpassen der Lautstärke der ersten Einrichtung auf der Grundlage der ersten Entfernung umfasst:

Erkennen, zu einem ersten Zeitpunkt, dass eine Entfernung der zweiten Einrichtung relativ zu der ersten Einrichtung die erste Entfernung ist, und Erkennen, zu einem zweiten Zeitpunkt nach dem ersten Zeitpunkt, dass eine Entfernung der zweiten Einrichtung relativ zu der ersten Einrichtung eine dritte Entfernung ist; und
wenn die erste Entfernung größer als die dritte Entfernung ist oder eine Differenz zwischen der ersten Entfernung und der dritten Entfernung größer als ein erster Schwellenwert ist, Verringern der Lautstärke der ersten Einrichtung auf eine erste Lautstärke; oder
wenn die erste Entfernung kleiner als die dritte Entfernung ist oder eine Differenz zwischen der dritten Entfernung und der ersten Entfernung größer als ein zweiter Schwellenwert ist, Erhöhen der Lautstärke der ersten Einrichtung auf eine zweite Lautstärke, wobei die zweite Lautstärke größer als die erste Lautstärke ist.

2. Verfahren nach Anspruch 1, wobei vor dem Steuern des Anrufs auf der ersten Einrichtung, um an die zweite Einrichtung oder eine dritte Einrichtung weitergeleitet zu werden, das Verfahren ferner umfasst:

Erhalten (S205) einer ersten Ausrichtung der zweiten Einrichtung relativ zu der ersten Einrichtung; und
Anpassen (S206) einer Schallerzeugungsrichtung der ersten Einrichtung auf der Grundlage der ersten Ausrichtung.

3. Verfahren nach Anspruch 2, wobei das Anpassen einer Schallerzeugungsrichtung der ersten Einrichtung auf der Grundlage der ersten Ausrichtung umfasst:

Verstärken eines von der ersten Einrichtung erzeugten Schalls zu der ersten Ausrichtung; und/oder
Unterdrücken einer Schallintensität in einer anderen Ausrichtung als der ersten Ausrichtung der ersten Einrichtung.

4. Verfahren nach einem der Ansprüche 1 bis 3, wobei das Anpassen der Lautstärke der ersten Einrichtung auf der Grundlage des ersten Abstands der folgenden Formel entspricht:

$$V_1 = V_0 + p\,(L_1 - L_0),$$

wobei
$V_0$ die Lautstärke der ersten Einrichtung zu dem ersten Zeitpunkt ist, $V_1$ die Lautstärke der ersten Einrichtung zu dem zweiten Zeitpunkt ist, $L_0$ die erste Entfernung ist, $L_1$ die dritte Entfernung ist und p ein Anpassungskoeffizient ist.

5. Verfahren nach einem der Ansprüche 1 bis 4, wobei das Steuern des Anrufs auf der ersten Einrichtung, um an die zweite Einrichtung weitergeleitet zu werden, umfasst:

Ausgeben erster Aufforderungsinformationen auf der zweiten Einrichtung, wobei die ersten Aufforderungsinformationen verwendet werden, um den Benutzer aufzufordern, den Anruf an die zweite Einrichtung weiterzuleiten; und
wenn eine Anweisung, die verwendet wird, um anzugeben, dass der Benutzer mit der Weiterleitung des Anrufs an die zweite Einrichtung einverstanden ist, erkannt wird, Steuern des Anrufs auf der ersten Einrichtung, um an die zweite Einrichtung weitergeleitet zu werden.

6. Verfahren nach einem der Ansprüche 1 bis 4, wobei das Steuern des Anrufs auf der ersten Einrichtung, um an eine dritte Einrichtung weitergeleitet zu werden, umfasst:

Bestimmen aller Einrichtungen, deren Entfernung zu der zweiten Einrichtung geringer als der voreingestellte Schwellenwert sind;
Bestimmen einer Einrichtung, die der zweiten Einrichtung von allen Einrichtungen am nächsten ist, als die dritte Einrichtung; oder Anzeigen von Identifikationsinformationen jeder Einrichtung von allen Einrichtungen auf der zweiten Einrichtung, Erkennen, dass der Benutzer erste Identifikationsinformationen aus den Identifikationsinformationen auswählt, und Bestimmen einer Einrichtung, die den ersten Identifikationsinformationen entspricht, als die dritte Einrichtung; und
Steuern des Anrufs auf der ersten Einrichtung, um an die dritte Einrichtung weitergeleitet zu werden.

7. Verfahren nach Anspruch 6, wobei vor dem Steuern des Anrufs auf der ersten Einrichtung, um an eine dritte Einrichtung weitergeleitet zu werden, das Verfahren ferner umfasst:

Ausgeben zweiter Aufforderungsinformationen auf der zweiten Einrichtung, wobei die zweiten Aufforderungsinformationen verwendet werden, um den Benutzer aufzufordern, den Anruf an die dritte Einrichtung weiterzuleiten; und
Erkennen einer Anweisung, die verwendet wird, um anzugeben, dass der Benutzer mit der Weiterleitung des Anrufs an die dritte Einrichtung einverstanden ist.

8. Endgerät, das umfasst:

einen Prozessor (1102); und
ein Computerspeichermedium, wobei das Computerspeichermedium Anweisungen umfasst und das Endgerät, wenn der Prozessor die Anweisungen ausführt, aktiviert wird, um ein Verfahren nach einem der Ansprüche 1 bis 7 durchzuführen.

9. Computerprogrammprodukt, das Computeranweisungen umfasst, wobei, wenn die Computeranweisungen auf einem Endgerät ablaufen gelassen werden, das Endgerät aktiviert wird, um das Verfahren nach einem der Ansprüche 1 bis 7 durchzuführen.

**Revendications**

1. Procédé d'appel, comprenant :

la détermination (S203) d'une première distance d'un deuxième appareil par rapport à un premier appareil, dans lequel le premier appareil est actuellement dans un appel, le deuxième appareil est un appareil actuellement transporté par un utilisateur et il existe une connexion de communication entre le premier appareil et le deuxième appareil ;
le fait de déterminer (S207) que la première distance est supérieure à une distance prédéfinie ; et
la commande du transfert de l'appel sur le premier appareil vers le deuxième appareil ou un troisième appareil, de sorte que l'appel se poursuit sur le deuxième appareil ou le troisième appareil, dans lequel une deuxième distance du troisième appareil par rapport au deuxième appareil est inférieure à un seuil prédéfini, **caractérisé en ce que** après la détermination d'une première distance d'un deuxième appareil par rapport à un premier appareil, le procédé comprend en outre :

l'ajustement (S204) d'un volume du premier appareil en fonction de la première distance,
l'ajustement du volume du premier appareil en fonction de la première distance comprend :

le fait de détecter, à un premier moment, qu'une distance du deuxième appareil par rapport au premier appareil est la première distance, et le fait de détecter, à un second moment après le premier moment, qu'une distance du deuxième appareil par rapport au premier appareil est une troisième distance ; et
lorsque la première distance est supérieure à la troisième distance ou qu'une différence entre la première distance et la troisième distance est supérieure à un premier seuil, la diminution du volume du premier appareil jusqu'à un premier volume ; ou
lorsque la première distance est inférieure à la troisième distance ou qu'une différence entre la troisième distance et la première distance est supérieure à un second seuil, l'augmentation du volume du premier appareil jusqu'à un second volume, dans lequel le second volume est supérieur au premier volume.

2. Procédé selon la revendication 1, dans lequel, avant la commande du transfert de l'appel sur le premier appareil vers le deuxième appareil ou un troisième appareil, le procédé comprend en outre :

l'obtention (S205) d'une première orientation du deuxième appareil par rapport au premier appareil ; et
l'ajustement (S206) d'une direction de production de son du premier appareil en fonction de la première orientation.

3. Procédé selon la revendication 2, l'ajustement d'une direction de production de son du premier appareil en fonction de la première orientation comprend :

l'amélioration d'un son produit par le premier appareil à la première orientation ; et/ou
la suppression d'une intensité de son dans une autre orientation différente de la première orientation du premier appareil.

4. Procédé selon l'une quelconque des revendications 1 à 3, dans lequel l'ajustement de volume du premier appareil en fonction de la première distance répond à la formule suivante :

$$V_1 = V_0 + p\,(L_1 - L_0),$$

où
$V_0$ représente un volume du premier appareil au premier moment, $V_1$ représente un volume du premier appareil au second moment, $L_0$ représente la première distance, $L_1$ représente la troisième distance, et p est un coefficient d'ajustement.

5. Procédé selon l'une quelconque des revendications 1 à 4, dans lequel la commande du transfert de l'appel sur le premier appareil vers le deuxième appareil comprend :

la sortie de premières informations d'invite sur le deuxième appareil, dans lequel les premières informations d'invite sont utilisées pour inviter l'utilisateur à transférer ou non l'appel vers le deuxième appareil ; et
lorsqu'une instruction utilisée pour indiquer que l'utilisateur accepte de transférer l'appel vers le deuxième appareil est détectée, la commande du transfert de l'appel sur le premier appareil vers le deuxième appareil.

6. Procédé selon l'une quelconque des revendications 1 à 4, dans lequel la commande du transfert de l'appel sur le premier appareil vers un troisième appareil comprend :

la détermination de tous les appareils dont les distances par rapport au deuxième appareil sont inférieures au seuil prédéfini ;
la détermination d'un appareil le plus proche du deuxième appareil dans tous les appareils comme étant le troisième appareil ; ou l'affichage d'informations d'identification de chaque appareil dans tous les appareils sur le deuxième appareil, le fait de détecter que l'utilisateur sélectionne des premières informations d'identification parmi les informations d'identification, et la détermination d'un appareil correspondant aux premières informations d'identification comme étant le troisième appareil ; et
la commande du transfert de l'appel sur le premier appareil vers le troisième appareil.

7. Procédé selon la revendication 6, dans lequel avant la commande du transfert de l'appel sur le premier appareil vers un troisième appareil, le procédé comprend en outre :

la sortie de secondes informations d'invite sur le deuxième appareil, dans lequel les secondes informations d'invite sont utilisées pour inviter l'utilisateur à transférer ou non l'appel vers le troisième appareil ; et
la détection d'une instruction utilisée pour indiquer que l'utilisateur accepte de transférer l'appel vers le troisième appareil.

8. Dispositif terminal, comprenant :

un processeur (1102) ; et
un support de stockage informatique, dans lequel le support de stockage informatique comprend des instructions, et lorsque le processeur exécute les instructions, le dispositif terminal est activé pour réaliser un procédé selon l'une quelconque des revendications 1 à 7.

9. Produit-programme informatique, comprenant des instructions informatiques, dans lequel, lorsque les instructions informatiques sont exécutées sur un dispositif terminal, le dispositif terminal est activé pour réaliser le procédé selon l'une quelconque des revendications 1 à 7.

FIG. 1

| First apparatus (sound box) | Second apparatus (band) | Another apparatus |
|---|---|---|

S201: Establish a connection

S202: The first apparatus makes a call with the another apparatus

S203: Detect a distance of the second apparatus relative to the first apparatus

S204: Adjust volume based on the distance

S205: Detect an orientation of the second apparatus relative to the first apparatus

S206: Adjust a sound production direction based on the orientation

No

S207: Determine whether the distance of the second apparatus relative to the first apparatus is greater than a preset distance

Yes

S208: First prompt information

S209: The second apparatus makes the call with the another apparatus

FIG. 2

1. A sound box is in a call

2. The sound box establishes a connection to a watch

3. The sound box detects a distance d from the watch in real time

4. Whether the distance d changes

No

Yes

5. Adjust volume

FIG. 3

FIG. 4

```
┌──────────────┐      ┌──────────────┐      ┌──────────────┐                              ┌──────────────┐
│ 1. A sound box│─────▶│ 2. The sound │─────▶│ 3. The sound │                      No      │ 5. Adjust a  │
│  is in a call │      │ box establishes│     │  box detects │       ┌─────────┐   ────    │    sound     │
│              │      │ a connection to│     │   position   │      ╱ 4. Whether ╲         │  production  │
└──────────────┘      │   a watch    │      │ coordinates  │─────▶│ an orientation of the │  Yes │  direction   │
                      └──────────────┘      │ (x, y, z) of the│    ╲ watch relative to the ╱────▶ └──────────────┘
                                            │ watch in real │      ╲ sound box changes ╱
                                            │     time     │        └─────────┘
                                            └──────────────┘
```

FIG. 5

First prompt information

Whether to transfer the call to the band?

The call is not transferred by default after 5s

401

402

Yes

No

FIG. 6

| 1. A sound box is in a call | → | 2. The sound box establishes a connection to a watch | → | 3. The sound box detects a distance d from the watch in real time | → |

No

4. Whether the distance d is greater than a preset distance

Yes → 5. Transfer the call to the watch

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016212274 A1
- CN 106470326 A
- CN 109640280 A